(19) **Europäisches Patentamt**
**European Patent Office**
**Office européen des brevets**

(11) **EP 4 229 310 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **21798581.1**

(22) Anmeldetag: **13.10.2021**

(51) Internationale Patentklassifikation (IPC):
**F16D 1/10** (2006.01)     **F16D 3/223** (2011.01)
**B60B 27/00** (2006.01)

(52) Gemeinsame Patentklassifikation (CPC):
**F16D 1/101; B60B 27/0026; B60B 35/121;**
F16D 3/223; F16D 2001/103; F16D 2003/22326

(86) Internationale Anmeldenummer:
**PCT/EP2021/078302**

(87) Internationale Veröffentlichungsnummer:
**WO 2022/079097 (21.04.2022 Gazette 2022/16)**

(54) **WELLE-NABE-VERBINDUNG MIT EINER STECKVERZAHNUNG**

SHAFT HUB COUPLING WITH SPLINES

ACCOUPLEMENT ARBRE-MOYEU AVEC DENTURE À EMBOÎTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2020 DE 102020126843**

(43) Veröffentlichungstag der Anmeldung:
**23.08.2023 Patentblatt 2023/34**

(73) Patentinhaber:
• **AUDI AG**
**85057 Ingolstadt (DE)**
• **VOLKSWAGEN AG**
**38440 Wolfsburg (DE)**

(72) Erfinder:
• **FRISCH, Michael**
**94513 Schoenberg (DE)**
• **ALBL, Johannes**
**85055 Ingolstadt (DE)**
• **HEISE, Wolfgang**
**38442 Wolfsburg (DE)**

(74) Vertreter: **Puschmann Borchert Kaiser Klettner Patentanwälte Partnerschaft mbB Bajuwarenring 21 82041 Oberhaching (DE)**

(56) Entgegenhaltungen:
DE-A1- 102017 129 620     JP-A- 2001 003 947
JP-A- 2013 122 266     JP-A- 2018 087 601
US-A1- 2008 141 812

**Beschreibung**

Die Erfindung betrifft eine Welle-Nabe-Verbindung gemäß der im Oberbegriff des Patentanspruches 1 angegebenen Art.

Aus dem Stand der Technik sind unterschiedliche Ausführungsformen von Welle-Naben-Verbindungen zur Übertragung eines Drehmoments bekannt. Bei Kraftfahrzeugen ist die Welle-Nabe-Verbindung zur Übertragung des Drehmoments von der Antriebswelle zur Radnabe in der Regel als eine Zahnwellenverbindung ausgebildet, wobei die Antriebswelle und die Radnabe über einen Schraubverband kraftschlüssig miteinander verbunden sind, vgl. DE 43 02 726 C2.

In der Regel ist dabei die eine Außenverzahnung aufweisende Welle axial in die eine Innenverzahnung aufweisende Radnabe eingesteckt, sodass Welle und Nabe über die miteinander kämmende Außen- und Innenverzahnung in einem Drehmitnahmeeingriff stehen. Die Außenverzahnung der Welle und die Innenverzahnung der Nabe bilden dabei eine formschlüssige Passverzahnung.

Passverzahnungen werden häufig als Übergangspassungen ausgebildet, d.h. bereits im Neuzustand kann es abhängig von der vorliegenden Toleranzpassung dazu kommen, dass zwischen den Zahnflanken der Wellenverzahnung und den Zahnflanken der Nabenverzahnung ein "Verdrehspiel" vorhanden ist. Ein Verdrehspiel kann sich aber auch beim "Einlaufen" der Verzahnung in den ersten tausend Betriebskilometer des Kraftfahrzeugs durch den Abbau von Formfehler einstellen. Aufgrund des Verdrehspiels, d.h. der ermöglichten Relativbewegung zwischen den Zahnflanken der Wellen- und Nabenverzahnung und des daraus bedingten schlagartigen Aufeinanderschlagens der Zähne, kann es zu unerwünschten, akustischen Effekten kommen. Diese unerwünschten Geräusche werden auch als "Ping-Noise" oder Anfahrknacken bezeichnet.

Insbesondere wenn auch ein Rutschen in entgegengesetzte Richtung beim Rückwärtsfahren oder durch Schubmomente, wie sie bei Elektrofahrzeugen im Rekuperationsbetrieb entstehen, erfolgt, können diese Geräusche wiederholt entstehen. Durch den Trend zu höheren Raddrehmomenten (große Räder, große Motordrehmomente) und der Rekuperation bei Elektrofahrzeugen, wird sich diese Problematik zukünftig verschärfen.

Zur Vermeidung dieser unerwünschten Geräusche offenbart die EP 0 318 266 B1 eine Zahnwellenverbindung, gemäß der die Zahnflanken der Wellenverzahnung oder die Zahnflanken der Nabenverzahnung sinusförmig gewellt ausgebildet sind, sodass die Zahnflanken von Wellen- und Nabenverzahnung verklemmt, also spielfrei miteinander in Eingriff stehen. Als nachteilig erweist sich hierbei, dass die sinusförmige Ausgestaltung der Zahnflanken aufwändig in der Fertigung und damit mit hohen Herstellungskosten verbunden ist. Ein weiterer Nachteil ist die aufgrund der sinusförmigen Gestaltung der Zahnflanken der Wellen- oder Nabenverzahnung bedingte geringe Kontaktflächengröße zwischen den Zahnflanken.

Eine gattungsgemäße, sämtliche Merkmale des Oberbegriffes des Patentanspruches 1 aufweisende Welle-Nabe-Verbindung ist aus der JP 2001 003 947 A bekannt. Ergänzend wird noch auf die US 2008 141 812 A1, die JP 2013 122 266 A und die DE 10 2017 129 610 A1 verwiesen.

Der Erfindung liegt die Aufgabe zugrunde eine Welle-Nabe-Verbindung gemäß der im Oberbegriff des Patentanspruches 1 angegebenen Art derart weiterzubilden, dass ein Auftreten von unerwünschten Geräuschen, wie Anfahrknacken oder "Ping Noise", vermieden wird.

Diese Aufgabe wird durch die kennzeichnenden Merkmale des Patentanspruches 1 in Verbindung mit seinen Oberbegriffsmerkmalen gelöst.

Die Unteransprüche 2 bis 9 bilden vorteilhafte Weiterbildungen der Erfindung.

In bekannter Art und Weise umfasst die Welle-Nabe-Verbindung eine Welle und eine Nabe, die über eine erste Verzahnung und eine dazu korrespondierende zweite Verzahnung um eine gemeinsame Drehachse drehfest miteinander in Eingriff stehen.

Lediglich der Vollständigkeit wird darauf hingewiesen, dass die über die erste und zweite Verzahnung in kämmenden Eingriff stehenden Bauteile, also Welle und Nabe, im Zahneingriffsbereich axial überlappend angeordnet sind. Die axial überlappende Anordnung von Welle und Nabe im Zahneingriffsbereich ist dabei so auszulegen, dass in radialer Richtung r betrachtet eine Anordnung bei der die Welle radial innen und die Nabe radial außen als auch eine Anordnung gemäß der die Nabe radial innen und die Welle radial außen mitumfasst sind.

Es wird zudem darauf hingewiesen, dass die Formulierung "Verzahnung" insbesondere so zu verstehen ist, dass die erste und zweite Verzahnung in Umfangsrichtung u betrachtet mehre Zähne aufweisen, deren Zahnflanken geradlinig, bevorzugt parallel zur Drehachse, verlaufen.

Zudem weist nunmehr die erste Verzahnung einen in axialer Richtung a betrachtet vorderen Verzahnungsbereich - nachfolgend auch als erster Verzahnungsbereich bezeichnet - und einen in axialer Richtung a betrachtet hinteren Verzahnungsbereich - nachfolgend auch als zweiter Verzahnungsbereich bezeichnet - auf. In Umfangsrichtung u betrachtet sind dabei der erste und zweite Verzahnungsbereich der ersten Verzahnung derart um ein Maß d versetzt angeordnet, dass die Zähne des ersten Verzahnungsbereiches über ihre in Umfangsrichtung u betrachtet vorderen Zahnflanken mit der zweiten Verzahnung in Eingriff stehen, während die Zähne des zweiten Verzahnungsbereiches über ihre in Umfangsrichtung u betrachtet hinteren Zahnflanken mit der zweiten Verzahnung in Eingriff stehen.

Diese Ausgestaltung hat den Effekt, dass aus dem Versatz der beiden Verzahnungsbereiche zueinander und des daraus bedingten selektiven Zahnflankeneingriffes, nämlich Eingriff des ersten Verzahnungsbereichs über die vorderen Zahnflanken der Zähne und Eingriff des zweiten Verzahnungsbereichs über die hinteren Zahnflanken der Zähne, sich die erste und zweite Verzahnung in Umfangsrichtung verspannen und sich damit eine Spielfreiheit einstellt.

Aufgrund der Spielfreiheit ist sichergestellt, dass eine Relativbewegung zwischen Welle und Nabe nicht mehr stattfinden kann, mit der Folge, dass das Auftreten von unerwünschten, im Wesentlichen aus einer Relativbewegung zwischen Welle und Nabe resultierenden Geräuschen, wie z.B. Anfahrknacken oder "Ping Noise", erfolgreich verhindert wird. Im Vergleich zum Stand der Technik, EP 0 318 266 B1, stehen die Wellen- oder Nabenverzahnung über größere Anlageflächen in Kontakt; zudem ist aufgrund der geradlinigen Zahnflankengestaltung eine vereinfachte und damit kostengünstigere Fertigung ermöglicht.

Erfindungsgemäß ist der in axialer Richtung a betrachtet vordere bzw. erste Verzahnungsbereich in seiner axialen Länge L1 so dimensioniert, dass bezogen auf die gesamte axiale Länge der ersten Verzahnung, nachfolgend mit L bezeichnet, für die axiale Länge L1 des ersten Verzahnungsbereiches gilt:

$$\text{axiale Länge L1/axiale Länge L} > 0,5.$$

D.h., der in axialer Richtung a bzw. in Fügerichtung betrachtet vordere Verzahnungsbereich ist in seiner axialen Länge L1 größer als der in Fügerichtung betrachtet hintere Verzahnungsbereich mit seiner axialen Länge L2.

Hierdurch ist in vorteilhafter Weise gewährleistet, dass sich Welle und Nabe über den größeren Teil der Verzahnung, nämlich dem vorderen bzw. ersten Verzahnungsbereich, mit Spiel fügen lassen. Dies erweist sich in Hinblick auf die Montage als vorteilhaft, da hierdurch über einen langen Bereich ein vereinfachtes "Anfädeln" per Hand ermöglicht ist und lediglich für den anschließenden kleineren Bereich das Fügen mittels mechanischer Hilfsmittel, beispielsweise durch Anziehen einer Zentralschraube, erfolgen muss.

Wie erste Versuche gezeigt haben, ist dabei das Maß d um das die beiden Verzahnungsbereiche der ersten Verzahnung in Umfangsrichtung u versetzt zueinander angeordnet sind, bevorzugt so zu wählen, dass

$$5 \ \mu m < \text{Maß (d)} < 0,5 \ m,$$

wobei mit m der Modul der ersten Verzahnung bezeichnet ist.

Damit es beim Fügeprozess von Welle und Nabe zu keinem Verkannten kommt, sind der erste und zweite Verzahnungsbereich bevorzugt über einen, als Führung dienenden, dritten Verzahnungsbereich miteinander verbunden. D.h., die erste Verzahnung ist in Art einer "S-Verzahnung", d.h. dreiteilig, nämlich einen ersten und zweiten Verzahnungsbereich sowie einen - in axialer Richtung a betrachtet zwischen dem ersten und zweiten Verzahnungsbereich angeordneten - dritten Verzahnungsbereich aufweisend, ausgebildet.

Bevorzugt ist dabei der als Führung dienende dritte Verzahnungsbereich in seiner axialen Länge L3 so dimensioniert, dass bezogen auf die axiale Länge L der ersten Verzahnung gilt:

$$0,05 \leq \text{axiale Länge L3/axiale Länge L} \leq 0,33$$

Durch die verhältnismäßig kurze Ausgestaltung des dritten Verzahnungsbereiches ist in vorteilhafter Weise sichergestellt, dass die erste Verzahnung über die nahezu gesamte Verzahnungslänge, nämlich L1 und L2, in Drehmitnahmeeingriff stehen. Dies wiederum hat den Effekt, dass aufgrund des dadurch bedingten hohen Traganteils der Verzahnung, die erste Verzahnung relativ kurz ausgeführt werden kann, was zusätzliche Gewichts- und Kostenvorteile bringt.

Eine alternative, in der Fertigung weniger aufwändige Gestaltung der ersten Verzahnung sieht vor, dass der erste und zweite Verzahnungsbereich über einen Freistich voneinander getrennt sind. Um auch in diesem Fall einen einfachen, verkantungsfreien Fügeprozess zu gewährleisten, weisen die Zähne des zweiten Verzahnungsbereiches, also die Zähne des in axialer Richtung a bzw. in Fügerichtung betrachtet hinteren Verzahnungsbereiches, an ihrem dem ersten Verzahnungsbereich zugewandten Zahnkante eine Einfädelspitze auf.

Um auch hier eine möglichst große Verzahnungslänge der aus dem ersten und zweiten Verzahnungsbereich bestehenden ersten Verzahnung sicherzustellen, ist der Freistich in seiner axialen Länge L4 möglichst klein ausgeführt, insbesondere so, dass

$$\text{axiale Länge L4/axiale Länge L} \leq 0,33,$$

wobei mit L4 die axiale Länge des Freistichs und mit L die axiale Länge der ersten Verzahnung bezeichnet ist.

Hierdurch ist wiederum in vorteilhafter Weise ein hoher Traganteil der ersten Verzahnung und damit eine gewichtsreduzierte und kostengünstige Ausgestaltung ermöglicht.

Gemäß einer bevorzugten ersten Ausführungsform der erfindungsgemäßen Welle-Nabe-Verbindung, weist die Welle die erste Verzahnung auf, während die mit der ersten Verzahnung in Eingriff stehende zweite Verzahnung an der Nabe ausgebildet ist.

Eine besonders bevorzugte erste Ausgestaltung der ersten Ausführungsform sieht dabei vor, dass die die erste Verzahnung bildende Wellenverzahnung in Form einer Außenverzahnung der Welle und entsprechend die die zweite Verzahnung bildende Nabenverzahnung in Form einer Innenverzahnung der Nabe ausgebildet ist. D.h. im axialen Überlappungsbereich von Welle und Nabe, also im Zahneingriffsbereich, ist vorliegend in radialer Richtung r betrachtet die Welle radial innen und die Nabe radial außen angeordnet. Aufgrund der Ausbildung der ersten Verzahnung, also der die Verzahnungsbereiche aufweisende Verzahnung, als Außenverzahnung, ist in vorteilhafter Weise eine vereinfachte und kostengünstige Herstellung gewährleistet.

Eine alternative zweite Ausgestaltung der ersten Ausführungsform zeichnet sich dadurch aus, dass die die erste Verzahnung bildende Wellenverzahnung als eine Innenverzahnung der Welle und die die zweite Verzahnung bildende Nabenverzahnung als eine Außenverzahnung der Nabe ausgebildet ist. Mit anderen Worten, im Zahneingriffsbereich, also im axialen Überlappungsbereich von Welle und Nabe, ist in radialer Richtung r betrachtet die Nabe radial innen und die Welle radial außen angeordnet.

Eine z.B. aus Packagegründen oder in Bezug auf konkrete Bauraumanforderungen u.U. vorteilhafte zweite Ausführungsform der erfindungsgemäßen Welle-Nabe-Verbindung sieht eine zur ersten Ausführungsform vertauschte Anordnung der ersten und zweiten Verzahnung vor: d.h., die die Verzahnungsbereiche aufweisende erste Verzahnung ist an der Nabe und die mit der ersten Verzahnung in Eingriff stehende zweite Verzahnung ist an der Welle ausgebildet.

Gemäß einer ersten Ausgestaltung der zweiten Ausführungsform ist dabei die die erste Verzahnung bildende Nabenverzahnung als eine Außenverzahnung der Nabe und entsprechend ist die mit der Nabenverzahnung kämmende zweite Verzahnung als eine Innenverzahnung der Welle ausgebildet. In Bezug auf den axialen Überlappungsbereich von Welle und Nabe, als im Zahneingriffsbereich, heißt das wiederum, dass ist in radialer Richtung r betrachtet die Nabe radial innen und die Welle radial außen angeordnet ist.

Gemäß einer alternativen zweiten Ausgestaltung der zweiten Ausführungsform ist auch denkbar, die die erste Verzahnung bildende Nabenverzahnung in Form einer Innenverzahnung der Nabe und entsprechend die mit der ersten Verzahnung kämmende, die zweite Verzahnung bildende Wellenverzahnung in Form einer Außenverzahnung der Welle auszubilden. D.h. im axialen Überlappungsbereich von Welle und Nabe, also im Zahneingriffsbereich, ist gemäß dieser Ausgestaltung in radialer Richtung r betrachtet die Welle radial innen und die Nabe radial außen angeordnet.

Vorzugsweise soll die erfindungsgemäße Welle-Naben-Verbindung zur Drehmomentübertragung im Antriebsstrang eines Kraftfahrzeugs Anwendung findet, d.h. bei der Welle handelt es sich bevorzugt um eine ein Rad eines Kraftfahrzeugs antreibende Antriebswelle und entsprechend handelt es sich bei der Nabe bevorzugt um eine das Rad drehbar lagernde Radnabe.

Der Erfindung liegt des Weiteren die Aufgabe zugrunde ein Kraftfahrzeug gemäß der im Oberbegriff des Patentanspruches 11 anzugeben Art derart weiterzubilden, dass die Gefahr des Auftretens von störenden Geräuschen beim Anfahren oder Lastwechsel deutlich verringert wird.

Diese Aufgabe wird durch die kennzeichnenden Merkmale des Patentanspruches 11 in Verbindung mit seinen Oberbegriffsmerkmalen gelöst.

In bekannter Art und Weise sind dabei die angetriebenen Räder des Kraftfahrzeugs jeweils über eine Welle-Nabe-Verbindung, die zwischen einem Achszapfen einer Antriebswelle und einer zugeordneter Radnabe ausgebildet ist, drehfest miteinander verbunden.

Erfindungsgemäß ist nunmehr vorgesehen, dass die Welle-Nabe-Verbindung nach einem der Ansprüche 1 bis 10 ausgebildet ist.

Sämtliche Ausführungen zur erfindungsgemäßen Welle-Nabe-Verbindung lassen sich analog auf das erfindungsgemäße Kraftfahrzeug übertragen, sodass mit diesem die zuvor genannten Vorteile erzielt werden.

Weitere Vorteile und Anwendungsmöglichkeiten der Erfindung ergeben sich aus der nachfolgenden Beschreibung in Verbindung mit dem in der Zeichnung dargestellten Ausführungsbeispiel.

In der Zeichnung bedeutet:

Fig. 1     eine erste Ausführungsform einer Welle der erfindungsgemäßen Welle-Nabe-Verbindung;

Fig. 2     eine vergrößerte Darstellung des Achszapfens der Welle aus Fig. 1;

Fig. 3     der Achszapfen aus Fig. 2 in einer Ansicht schrag von vorne;

Fig. 4      eine zweite Ausführungsform einer Welle der erfindungsgemäßen Welle-Nabe-Verbindung, und

Fig. 5      eine vergrößerte Darstellung des Achszapfens der Welle aus Fig. 4.

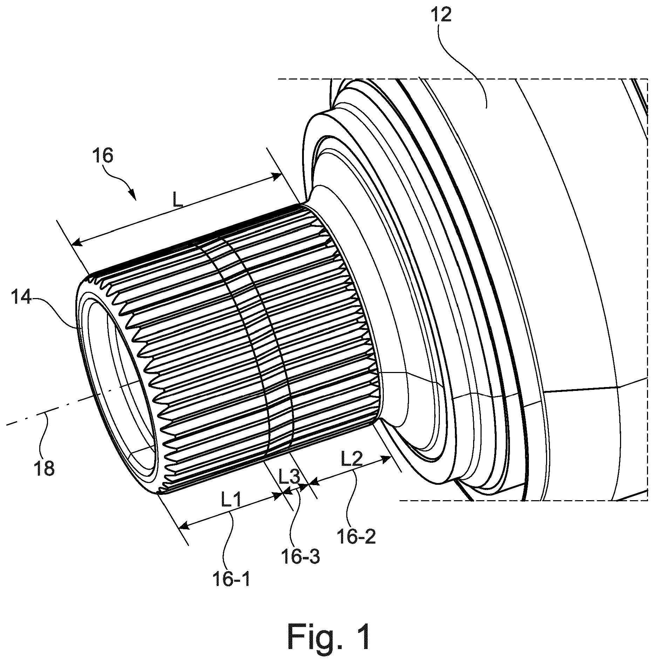

Fig. 1 bis 3 zeigen eine erste Ausführungsform einer Welle 12 einer erfindungsgemäßen Welle-Nabe-Verbindung.

In bekannter Art und Weise umfasst die Welle 12 einen Achszapfen 14, der eine als umlaufende Außenverzahnung ausgebildete erste Verzahnung 16 aufweist.

Entsprechend weist die Nabe - auf deren Darstellung hier aus Gründen der Übersichtlichkeit verzichtet wurde - ihrerseits eine in Form einer umlaufenden Innenverzahnung ausgebildete zweite Verzahnung auf. Die Zähne der als Innenverzahnung ausgebildeten zweiten Verzahnung sind dabei geradlinig, parallel zur Drehachse 18 verlaufend ausgerichtet.

Die erste Verzahnung 16, also die Außenverzahnung der Welle 12, und die zweite Verzahnung, also Innenverzahnung der Nabe, sind dabei so ausgebildet, dass nach Fügen des Achszapfens 16 in die Nabe, die erste Verzahnung 16 in kämmenden Eingriff mit der zweiten Verzahnung steht, sodass Welle 12 und Nabe um die Drehachse 18 drehfest miteinander verbunden sind.

Da - wie bereits ausgeführt - die erste Verzahnung 16 als eine Außenverzahnung der Welle 12 bzw. des Achszapfens 14 der Welle 12 und die zweite Verzahnung als eine Innenverzahnung der Nabe ausgebildet sind und somit zum Fügen der Achszapfen 14 in Nabe axial einzustecken bzw. einzuschieben ist, ist vorliegend nach Fügen von Welle 12 und Nabe im axialen Überlappungsbereich von Welle und Nabe, also im Zahneingriffsbereich, der Achszapfen 14 der Welle 12 in radialer Richtung r betrachtet radial innen und die Nabe radial außen angeordnet.

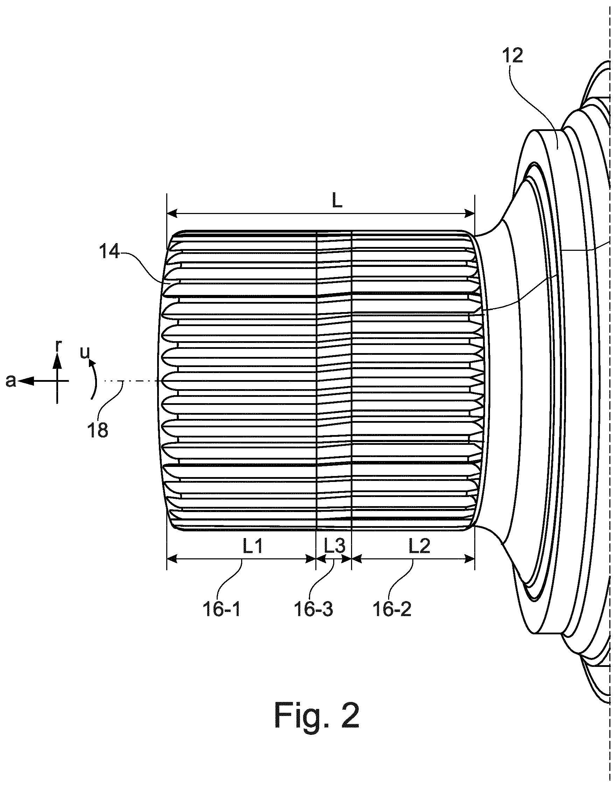

Wie Fig. 1 und Fig. 2 weiter zu entnehmen ist, weist die als Außenverzahnung ausgebildete erste Verzahnung 16 des Achszapfens 14 insbesondere zwei Verzahnungsbereiche mit - korrespondierend zur zweiten Verzahnung (Innenverzahnung der Nabe) ausgebildeten - geradlinig und parallel zur Drehachse 18 verlaufend ausgerichteten Zähnen auf, nämlich einen in axialer Richtung a betrachtet vorderen Verzahnungsbereich, nachfolgend auch als erster Verzahnungsbereich 16-1 bezeichnet, und einen in axialer Richtung a betrachtet hinteren Verzahnungsbereich, nachfolgend auch als zweiter Verzahnungsbereich 16-2 bezeichnet, auf. Mit L, L1 und L2 sind in Fig. 1 und Fig. 2 die axialen Längen der Verzahnung 16 bzw. der Verzahnungsbereiche 16-1, 16-2 bezeichnet. D.h. in axialer Richtung a betrachtet weist die erste Verzahnung 16 die axiale Länge L auf; entsprechend weist der erste Verzahnungsbereiches 16-1 die axiale Länge L1 und der Verzahnungsbereich 16-2 die axiale Länge L2 auf.

Wie Fig. 1 und Fig. 2 weiter zu entnehmen ist, weist dabei der erste Verzahnungsbereich 16-1 eine Länge L1 auf, die größer als die Länge L2 des zweiten Verzahnungsbereiches 16-2 ist.

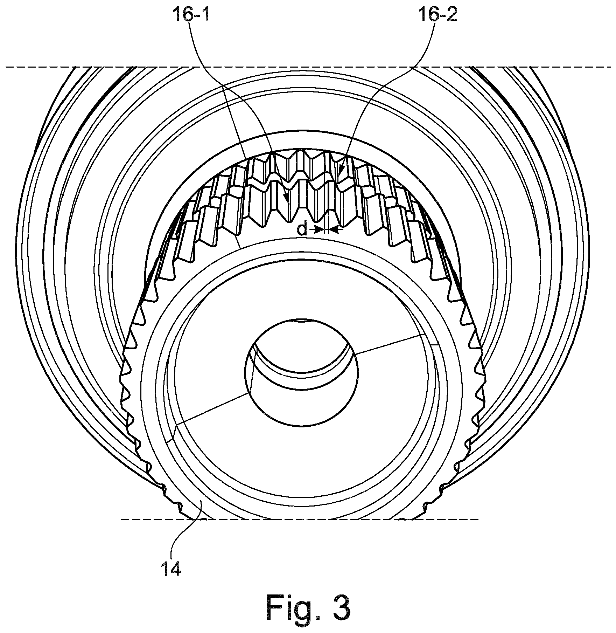

Zudem sind die geradlinig und parallel zur Drehachse 18 verlaufenden Zähne des ersten Verzahnungsbereichs 16-1 und die geradlinig und parallel zur Drehachse 18 verlaufenden Zähne des zweiten Verzahnungsbereichs 16-2 in Umfangsrichtung u um ein Maß d, versetzt angeordnet, vgl. Fig. 3.

Das Maß d ist dabei so gewählt, dass nach Fügen der Welle 12 bzw. des Achszapfens 14 in die Nabe, die Zähne des ersten Verzahnungsbereiches 16-1 über ihre in Umfangsrichtung u betrachtet vorderen Zahnflanken mit zweiten Verzahnung, d.h. Innenverzahnung der Nabe, und die Zähne des zweiten Verzahnungsbereiches 16-2 über ihre in Umfangsrichtung u betrachtet hinteren Zahnflanken mit der zweiten Verzahnung, als der Innenverzahnung der Nabe, in Eingriff stehen.

Der selektive Zahnflankeneingriff, nämlich Eingriff der Zähne des ersten Verzahnungsbereiches 16-1 über die in Umfangsrichtung u betrachtet vorderen Zahnflanken und Eingriff der Zähne des hinteren Verzahnungsbereiches 16-2 über die in Umfangsrichtung u betrachtet hinteren Zahnflanken, bewirken ein Verspannen der ersten und zweiten Verzahnung in Umfangsrichtung u, mit der Folge, dass sich eine Spielfreiheit einstellt.

Die Spielfreiheit hat wiederum den Effekt, dass eine Relativbewegung zwischen Welle 12 und Nabe nicht stattfinden kann, sodass ein Auftreten von, aus unerwünschten Relativbewegungen zwischen Welle 12 und Nabe resultierenden Geräuschen, wie z.B. Anfahrknacken oder "Ping Noise", erfolgreich verhindert wird.

Um beim Fügeprozess von Welle 12 und Nabe ein Verkanten zu vermeiden, sind vorliegend zudem - wie insbesondere aus Fig. 1 und Fig. 2 ersichtlich - der erste und zweite Verzahnungsbereich 16-1,16-2 der ersten Verzahnung 16 über einen, in axialer Richtung a betrachtet zwischen dem ersten und zweiten Verzahnungsbereich 16-1, 16-2 angeordneten, als Führung dienenden dritten Verzahnungsbereich 16-3 miteinander verbunden. Die axiale Länge des dritten Verzahnungsbereiches 16-3 ist mit L3 bezeichnet, vgl. Fig. 1 und Fig. 2.

Da die axiale Länge L1 des ersten Verzahnungsbereiches 16-1 bereits größer als die axiale Länge L2 des zweiten Verzahnungsbereiches 16-1 ist, sind die bei der Montage zuerst zu fügenden Verzahnungsbereiche, nämlich erster Verzahnungsbereich 16-1 und der sich daran anschließende dritte Verzahnungsbereich 16-3, zusammen entsprechend größer als die axiale Länge L2 des zweiten Verzahnungsbereiches 16-2. Somit ist in vorteilhafter Weise bei der Montage über den verhältnismäßig großen Bereich L1 + L3 ein vereinfachtes "Anfädeln" per Hand möglich, sodass lediglich im Bereich des anschließenden kleineren Bereiches L2 das Fügen mittels mechanischer Hilfsmittel, beispielsweise durch Anziehen einer Zentralschraube, erfolgen muss.

Da der lediglich als Führung dienende dritte Verzahnungsbereich 16-3 nicht zum Traganteil der ersten Verzahnung 16 beiträgt, ist dieser möglichst kurz auszuführen. Bezogen auf die Gesamtlänge L der ersten Verzahnung ist diese bevorzugt so ausgebildet, dass

$$0{,}05 \leq \text{axiale Länge L3/axiale Länge L} \leq 0{,}33.$$

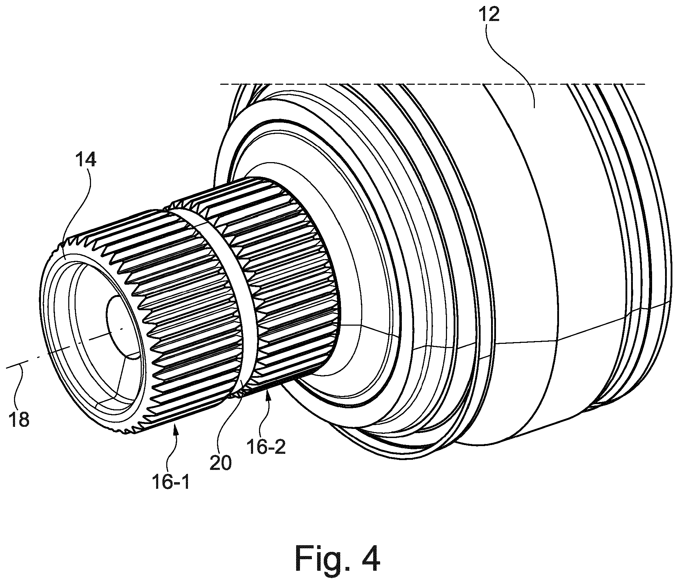

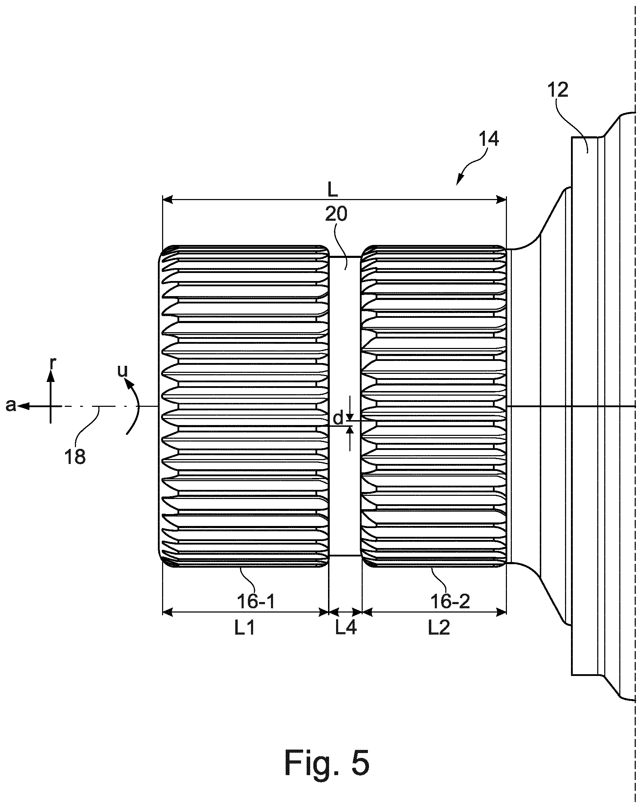

Eine zweite Ausführungsform der Welle 12 ist in Fig. 4 und 5 dargestellt. Die Welle 12 gemäß der zweiten Ausführungsform entspricht dabei im Wesentlichen der in Fig. 1 bis 3 dargestellten und bereits oben beschriebenen Welle 12 gemäß der ersten Ausführungsform. Von daher wird zur Vermeidung von Wiederholungen auf das oben Dargelegte verwiesen.

Die in Fig. 4 und 5 dargestellte Welle 12 unterscheidet sich gegenüber der Welle 12 gemäß der ersten Ausführungsform dadurch, dass die in Umfangsrichtung u betrachtet um das Maß d versetzt angeordneten Verzahnungsbereiche 16-1 und 16-2 über einen Freistich 20 voneinander getrennt sind. Die axiale Länge des Freistichs ist mit L4 bezeichnet, vgl. Fig. 5.

Da der Freistich nicht zum Traganteil der ersten Verzahnung beiträgt, ist der Freistich 20 wiederum möglichst klein auszuführen.

Bevorzugt ist der Freistich 20 in Bezug auf seine axiale Länge L4 so ausgebildet, dass bezogen auf die axiale Länge L der ersten Verzahnung 16 gilt:

$$\text{axiale Länge L4/axiale Länge L} \leq 0{,}33.$$

Vorteilhaft an dieser Ausführungsform ist, dass - aufgrund des Wegfalls des dritten Verzahnungsbereiches - eine im Vergleich zur ersten Ausführungsform weniger aufwändige und damit kostengünstigere Herstellung ermöglicht ist.

Um auch bei der "Freistich-Ausführung" einen verkantungsfreien Fügeprozess von Welle 12 und Nabe zu ermöglichen, sind die Zähne des zweiten Verzahnungsbereiches 16-2 bevorzugt mit einer Einfädelspitze versehen.

**Patentansprüche**

1. Welle-Nabe-Verbindung, umfassend eine Welle (12) und eine Nabe, die über eine erste Verzahnung (16) und zweite Verzahnung um eine Drehachse (18) drehfest miteinander in Eingriff stehen, wobei in axialer Richtung (a) betrachtet die erste Verzahnung (16) einen ersten Verzahnungsbereich (16-1) und einen zweiten Verzahnungsbereich (16-2) aufweist, wobei der erste und zweite Verzahnungsbereich (16-1, 16-2) in Umfangsrichtung (u) betrachtet derart um ein Maß (d) versetzt angeordnet sind, dass der erste Verzahnungsbereich (16-1) über in Umfangsrichtung (u) betrachtet vordere Zahnflanken und der zweite Verzahnungsbereich (16-2) über in Umfangsrichtung (u) betrachtet hintere Zahnflanken mit der zweiten Verzahnung in Eingriff stehen, wobei in axialer Richtung (a) betrachtet die erste Verzahnung (16) eine axiale Länge (L) und der erste Verzahnungsbereich (16-1) eine axiale Länge (L1) aufweisen, **dadurch gekennzeichnet, dass** bezogen auf die axiale Länge (L) der ersten Verzahnung (16) für die axiale Länge (L1) des in Fügerichtung betrachtet vorderen ersten Verzahnungsbereiches (16-1) gilt:

$$\text{axiale Länge (L1)/axiale Länge (L)} > 0{,}5$$

2. Welle-Nabe-Verbindung nach Anspruch 1,
   **dadurch gekennzeichnet, dass**
   für das Maß (d) um die die beiden Verzahnungsbereiche (16-1, 16-2) der ersten Verzahnung (16) in Umfangsrichtung (u) versetzt zueinander angeordnet sind gilt:

$$5 \ \mu m < d < 0{,}5 \ m,$$

   wobei mit m der Modul der ersten Verzahnung (16) bezeichnet ist.

3. Welle-Nabe-Verbindung nach Anspruch 1,
   **dadurch gekennzeichnet, dass**
   der erste und zweite Verzahnungsbereich (16-1, 16-2) über einen dritten Verzahnungsbereich (16-3) miteinander verbunden sind.

4. Welle-Nabe-Verbindung nach Anspruch 3,
**dadurch gekennzeichnet, dass**
in axialer Richtung (a) betrachtet der dritte Verzahnungsbereich (16-3) eine axiale Länge (L3) aufweist, für die bezogen auf die axiale Länge (L) der ersten Verzahnung (16) gilt:

$$0{,}05 \leq \text{axiale Länge (L3)/axiale Länge (L)} \leq 0{,}33$$

5. Welle-Nabe-Verbindung nach einem der Ansprüche 1,
**dadurch gekennzeichnet, dass**
der erste und zweite Verzahnungsbereich (16-1, 16-2) über einen Freistich (20) voneinander getrennt sind.

6. Welle-Nabe-Verbindung nach Anspruch 5,
**dadurch gekennzeichnet, dass**
in axialer Richtung (a) betrachtet der Freistich eine axiale Länge (L4) aufweist, für die bezogen auf die axiale Länge (L) der ersten Verzahnung (16) gilt:

$$\text{axiale Länge (L4)/axiale Länge (L)} \leq 0{,}33$$

7. Welle-Nabe-Verbindung nach Anspruch 5 oder 6,
**dadurch gekennzeichnet, dass**
die Zähne des zweiten Verzahnungsbereiches (16-2) eine Einfädelspitze aufweisen.

8. Welle-Nabe-Verbindung nach einem der Ansprüche 1 bis 7,
**dadurch gekennzeichnet, dass**

die Welle (12) die erste Verzahnung (16) und die Nabe die zweite Verzahnung aufweist, wobei
die erste Verzahnung (16) als eine Außenverzahnung der Welle (12) und die zweite Verzahnung als eine Innenverzahnung der Nabe ausgebildet ist, oder
die erste Verzahnung (16) als eine Innenverzahnung der Welle (12) und die zweite Verzahnung als eine Außenverzahnung der Nabe ausgebildet ist.

9. Welle-Nabe-Verbindung nach einem der Ansprüche 1 bis 7,
**dadurch gekennzeichnet, dass**

die Nabe die erste Verzahnung (16) und die Welle (12) die zweite Verzahnung aufweist, wobei
die erste Verzahnung (16) als eine Außenverzahnung der Nabe und die zweite Verzahnung als eine Innenverzahnung der Welle (12) ausgebildet ist, oder
die erste Verzahnung (16) als eine Innenverzahnung der Nabe und die zweite Verzahnung als eine Außenverzahnung der Welle (12) ausgebildet ist.

10. Kraftfahrzeug, bei der ein Achszapfen (14) einer Antriebswelle (12) über eine Welle-Nabe-Verbindung mit einer Radnabe eines Rades des Kraftfahrzeuges drehfest verbunden ist,
**dadurch gekennzeichnet, dass**
die Welle-Nabe-Verbindung nach einem der Ansprüche 1 bis 9 ausgebildet ist.

## Claims

1. Shaft-hub connection, comprising a shaft (12) and a hub, which are engaged with one another in a rotationally fixed manner via a first toothing (16) and a second toothing about an axis of rotation (18), the first toothing (16), when viewed in the axial direction (a), having a first toothing region (16-1) and a second toothing region (16-2), with the first and second toothing regions (16-1, 16-2), when viewed in the circumferential direction (u), being arranged offset by a dimension (d) in such a way that the first toothing region (16-1), when viewed in the circumferential direction (u), engages with the second toothing via front tooth flanks, and the second toothing region (16-2), when viewed in the circumferential direction (u), engages with the second toothing via rear tooth flanks, with the first toothing (16) having an axial length (L) and the first toothing region (16-1) having an axial length (L1), when viewed in the axial direction (a), **characterized in that,** with respect to the axial length (L) of the first toothing (16), the following applies to the axial length (L1) of the first toothing region (16-1) at the front as viewed in the joining direction:

$$\text{axial length (L1)/axial length (L)} > 0.5$$

2. Shaft-hub connection according to claim 1,
**characterized in that**
the following applies for the dimension (d) by which the two toothing regions (16-1, 16-2) of the first toothing (16) are arranged offset relative to one another in the circumferential direction (u):

$$5\ \mu m < d < 0.5\ m,$$

where m denotes the module of the first toothing (16).

3. Shaft-hub connection according to claim 1,
**characterized in that**
the first and second toothing regions (16-1, 16-2) are interconnected by a third toothing region (16-3).

4. Shaft-hub connection according to claim 3,
**characterized in that,**
when viewed in the axial direction (a), the third toothing region (16-3) has an axial length (L3) to which the following applies with respect to the axial length (L) of the first toothing (16):

$$0.05 \leq \text{axial length (L3)/axial length L} \leq 0.33.$$

5. Shaft-hub connection according to claim 1,
**characterized in that**
the first and second toothing regions (16-1, 16-2) are separated from each other by an undercut (20).

6. Shaft-hub connection according to claim 5,
**characterized in that,**
when viewed in the axial direction (a), the undercut has an axial length (L4) to which the following applies with respect to the axial length (L) of the first toothing (16):

$$\text{axial length (L4)/axial length (L)} \leq 0.33.$$

7. Shaft-hub connection according to any one of claims 5 or 6 above,
**characterized in that**
the teeth of the second toothing region (16-2) have a threading tip.

8. Shaft-hub connection according to any one of claims 1 to 7 above,
**characterized in that**

the shaft (12) has the first toothing (16) and the hub has the second toothing, wherein
the first toothing (16) is formed as an external toothing of the shaft (12) and the second toothing is formed as an internal toothing of the hub, or
the first toothing (16) is formed as an internal toothing of the shaft (12) and the second toothing is formed as an external toothing of the hub.

9. Shaft-hub connection according to any one of claims 1 to 7 above,
**characterized in that**

Title: EP 4 229 310 B1

the hub has the first toothing (16) and the shaft (12) has the second toothing, wherein
the first toothing (16) is formed as an external toothing of the hub and the second toothing is formed as an internal toothing of the shaft (12), or
the first toothing (16) is formed as an internal toothing of the hub and the second toothing is formed as an external toothing of the shaft (12).

10. Motor vehicle, in which an axle journal (14) of a drive shaft (12) is non-rotatably connected to a wheel hub of a wheel of the motor vehicle via a shaft-hub connection,
**characterized in that**
the shaft-hub connection is of the type claimed in any one of claims 1 to 9 above.

**Revendications**

1. Liaison arbre-moyeu, comprenant un arbre (12) et un moyeu, qui sont en prise l'un avec l'autre de manière solidaire en rotation autour d'un axe de rotation (18) par l'intermédiaire d'une première denture (16) et deuxième denture, dans laquelle vu dans la direction axiale (a) la première denture (16) présente une première zone de denture (16-1) et une deuxième zone de denture (16-2), dans laquelle les première et deuxième zones de denture (16-1, 16-2) vu dans la direction périphérique (u) sont disposées de manière décalée d'une grandeur (d), de telle sorte que la première zone de denture (16-1) par l'intermédiaire de flancs de dents avant vu dans la direction périphérique (u) et la deuxième zone de denture (16-2) par l'intermédiaire de flancs de dents arrière vu dans la direction périphérique (u) sont engrenées avec la deuxième denture, dans laquelle vu dans la direction axiale (a) la première denture (16) présente une longueur axiale (L) et la première zone de denture (16-1) une longueur axiale (L1),
**caractérisée en ce que**
rapporté à la longueur axiale (L) de la première denture (16) pour la longueur axiale (L1) de la première zone de denture avant (16-1) vu dans la direction d'assemblage s'applique :

$$\text{longueur axiale (L1)/longueur axiale (L)} > 0,5.$$

2. Liaison arbre-moyeu selon la revendication 1,
**caractérisée en ce que**

pour la grandeur (d) de laquelle les deux zones de denture (16-1, 16-2) de la première denture (16) sont disposées de manière décalée l'une de l'autre dans la direction périphérique (u) s'applique :

$$5 \ \mu m < d < 0,5 \ m,$$

dans laquelle le module de la première denture (16) est désigné par m.

3. Liaison arbre-moyeu selon la revendication 1,
**caractérisée en ce que**
les première et deuxième zones de denture (16-1, 16-2) sont reliées l'une à l'autre par l'intermédiaire d'une troisième zone de denture (16-3).

4. Liaison arbre-moyeu selon la revendication 3,
**caractérisée en ce que**
vu dans la direction axiale (a) la troisième zone de denture (16-3) présente une longueur axiale (L3) pour laquelle rapporté à la longueur axiale (L) de la première denture (16) s'applique :

$$0,05 \leq \text{longueur axiale (L3)/longueur axiale (L)} \leq 0,33.$$

5. Liaison arbre-moyeu selon l'une quelconque des revendications 1,
**caractérisée en ce que**
les première et deuxième zones de denture (16-1, 16-2) sont séparées l'une de l'autre par un dégagement (20).

6. Liaison arbre-moyeu selon la revendication 5,

**caractérisée en ce que**

vu dans la direction axiale (a) le dégagement présente une longueur axiale (L4) pour laquelle rapporté à la longueur axiale (L) de la première denture (16) s'applique :

$$\text{longueur axiale (L4)/longueur axiale (L)} \leq 0{,}33.$$

7. Liaison arbre-moyeu selon la revendication 5 ou 6,
   **caractérisée en ce que**
   les dents de la deuxième zone de denture (16-2) présentent une pointe d'insertion.

8. Liaison arbre-moyeu selon l'une quelconque des revendications 1 à 7,
   **caractérisée en ce que**

   l'arbre (12) présente la première denture (16) et le moyeu la deuxième denture, dans laquelle
   la première denture (16) est réalisée sous la forme d'une denture extérieure de l'arbre (12) et la deuxième denture sous la forme d'une denture intérieure du moyeu, ou
   la première denture (16) est réalisée sous la forme d'une denture intérieure de l'arbre (12) et la deuxième denture sous la forme d'une denture extérieure du moyeu.

9. Liaison arbre-moyeu selon l'une quelconque des revendications 1 à 7,
   **caractérisée en ce que**

   le moyeu présente la première denture (16) et l'arbre (12) la deuxième denture, dans laquelle
   la première denture (16) est réalisée sous la forme d'une denture extérieure du moyeu et la deuxième denture sous la forme d'une denture intérieure de l'arbre (12), ou
   la première denture (16) est réalisée sous la forme d'une denture intérieure du moyeu et la deuxième denture sous la forme d'une denture extérieure de l'arbre (12).

10. Véhicule à moteur, pour lequel un tourillon (14) d'un arbre d'entraînement (12) est relié de manière solidaire en rotation à un moyeu de roue d'une roue du véhicule à moteur par l'intermédiaire d'une liaison arbre-moyeu,
    **caractérisé en ce que**
    la liaison arbre-moyeu est réalisée selon l'une quelconque des revendications 1 à 9.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4302726 C2
- EP 0318266 B1
- JP 2001003947 A
- US 2008141812 A1
- JP 2013122266 A
- DE 102017129610 A1